(19) Europäisches Patentamt
European Patent Office
Office européen des brevets

(11) **EP 3 496 401 A1**

(12) **EUROPEAN PATENT APPLICATION**

(43) Date of publication:
**12.06.2019 Bulletin 2019/24**

(51) Int Cl.:
**H04N 19/105** (2014.01)   **H04N 19/159** (2014.01)
**H04N 19/117** (2014.01)   **H04N 19/82** (2014.01)

(21) Application number: **17306703.4**

(22) Date of filing: **05.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **THOMSON LICENSING**
**92130 Issy les Moulineaux (FR)**

(72) Inventors:
• **RACAPE, Fabien**
  **35576 Cesson-Sévigné (FR)**
• **RATH, Gagan**
  **35576 Cesson-Sévigné (FR)**
• **URBAN, Fabrice**
  **35576 Cesson-Sévigné (FR)**

(74) Representative: **Huchet, Anne et al**
**InterDigital CE Patent Holdings**
**20, rue Rouget de Lisle**
**92130 Issy-les-Moulineaux (FR)**

(54) **METHOD AND APPARATUS FOR VIDEO ENCODING AND DECODING BASED ON BLOCK SHAPE**

(57)    Methods (1300, 1500) and apparatuses (700, 1400, 1600) for video coding and decoding are provided. The method of video encoding (1300) includes accessing (1310) a set of reference samples used for prediction of a block in a picture of a video, processing (1320) the set of reference samples based on a shape of the block, generating (1330) a prediction block for the block based on the processed set of reference samples and encoding (1340) the block based on the prediction block. A bitstream formatted to include encoded data, a computer-readable storage medium and a computer program product are also described.

1300

| Access a set of reference samples used for prediction of a block in a picture of a video | 1310 |

| Process the set of reference samples based on a shape of the block | 1320 |

| Generate a prediction block for the block based on the processed set of reference samples | 1330 |

| Encode the block based on the prediction block | 1340 |

FIG. 13

**Description**

TECHNICAL FIELD

The present embodiments generally relate to video encoding and decoding, particularly to prediction of blocks based on block shape.

BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

To achieve high compression efficiency, image and video coding schemes usually employ prediction and transform to leverage spatial and temporal redundancy in the video content. Generally, intra or inter prediction is used to exploit the intra or inter frame correlation. Then the differences between the original image and the predicted image, often denoted as prediction errors or prediction residuals, are transformed, quantized and entropy coded. To reconstruct the video, the compressed data is decoded by inverse processes corresponding to the prediction, transform, quantization and entropy coding.

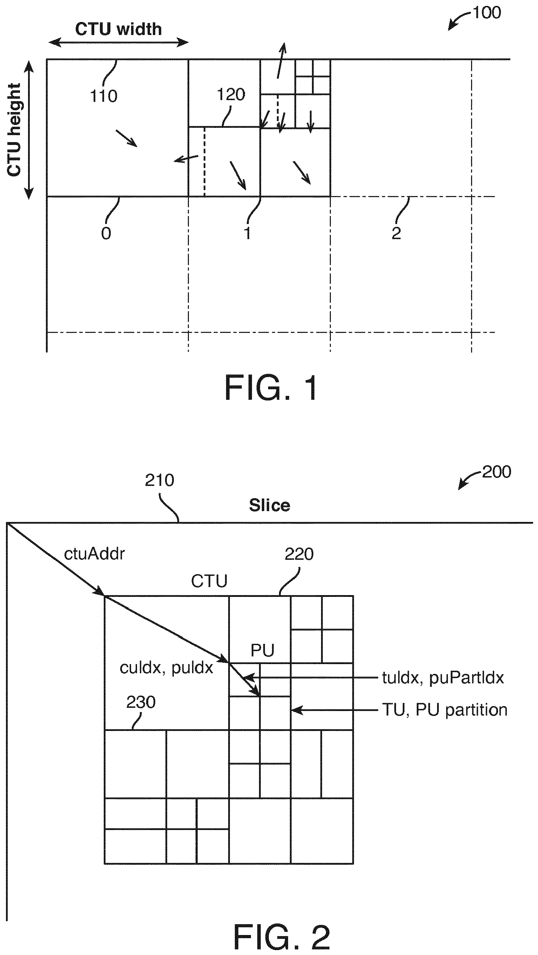

In the High Efficiency Video Coding (HEVC) standard ("ITU-T H.265 Telecommunication standardization sector of ITU (10/2014), series H: audiovisual and multimedia systems, infrastructure of audiovisual services - coding of moving video, High efficiency video coding, Recommendation ITU-T H.265"), a picture is partitioned into coding tree units (CTU) of square shape with a configurable size typically 64x64, 128x128, or 256x256. As illustrated in Figure 1, a CTU 110 is the root of a quad-tree partitioning into leaves called Coding Units (CU). For each CU, a prediction mode is signaled which indicates whether the CU is coded using intra or inter prediction. As illustrated in Figure 2, a consecutive set of CTUs (e.g., CTU 220) may be grouped into a slice 210. A CU (e.g., CU 230) may be partitioned into one or more Prediction Units (PU) and forms the root of a quad-tree (known as transform tree) partitioning into Transform Units (TUs). Asymmetric subdivision of the CU into PUs is also possible in inter prediction, that is if a CU has a size NxN, a PU may have a size N/4xN, 3N/4xN, NxN/4, Nx3N/4. Each PU is assigned some prediction information, for instance motion information, spatial intra prediction, etc. PUs are also shown in Figure 1 as dashed lines.

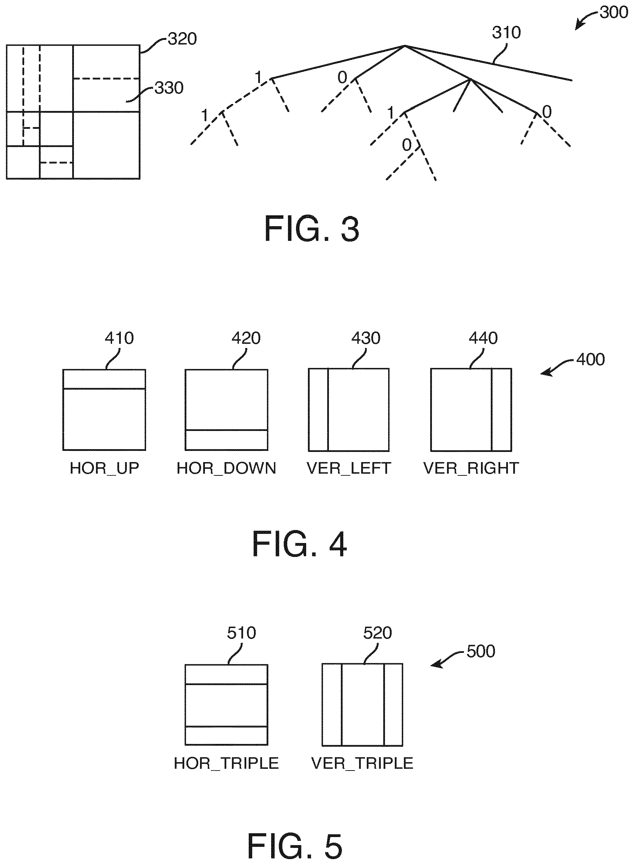

The Quad-Tree plus Binary-Tree (QTBT) coding tool is a new video coding tool that provides a more flexible CTU representation and increased compression efficiency compared to the CU/PU/TU arrangement of the HEVC standard. As illustrated in Figure 3, the Quad-Tree plus Binary-Tree (QTBT) coding tool defines a coding tree 310 where coding units can be split both in a quad-tree and in a binary-tree fashion. An exemplary coding tree representation of a Coding Tree Unit 320 is illustrated in Figure 3, where solid lines indicate quad-tree partitioning and dotted lines indicate binary partitioning of a CU 330 within CTU 320, which is spatially embedded in the quad-tree leaves.

The splitting of a CTU into coding units is decided on the encoder side, e.g. through a rate distortion optimization procedure which consists in determining the QTBT representation of the CTU with minimal rate distortion cost. In the QTBT representation, a CU has either a square or a rectangular shape. The size of a coding unit is always a power of 2, and typically goes from 4 to 128. The QTBT decomposition of a CTU comprises two stages: the CTU is first split into 4 CUs in a quad-tree fashion, then each quad-tree leaf can be further divided into two CUs in a binary fashion or into 4 CUs in a quad-tree fashion, as illustrated in Figure 3.

With the QTBT representation, a CU may not be further partitioned into PUs or TUs. In other words, each CU is considered as a single prediction unit and a single transform unit. However, such a QTBT representation only allows for symmetric splitting of a CU as illustrated by Figure 3. The four split modes allowed by QTBT are: NO_SPLIT (the CU is not split), QT_SPLIT (split into 4 quadrants), HOR (split horizontally into two CUs of equal size) and VER (split vertically into two CUs of equal size).

Recently, CUs with new rectangular shapes were proposed which result from a new Binary Splitting Mode called asymmetric splitting mode, as illustrated in Figures 4 and 5. Figure 4 illustrates a CU binary splitting mode in QTBT called asymmetric splitting mode and depicts 4 exemplary split modes 410 to 440. In Figure 4, the new rectangular shapes include sizes equal to $3 \cdot 2^n$ in width and/height. Moreover, a CU with a size multiple of 3 in width or height can be further split in a binary fashion, horizontally or vertically.

A square CU with size $(w, h)$ (width and height) that is split through one of the proposed asymmetric binary splitting modes, for example HOR_UP (horizontal-up) 410, results into 2 sub-coding units with respective rectangular sizes $\left(w, \frac{h}{4}\right)$ and $\left(w, \frac{3h}{4}\right)$. Therefore, a CU with width or height equal to $3 \cdot 2^n$ may be selected by the encoder. In such a case, an Intra prediction or Inter prediction process of a rectangular block with size multiple of 3 is performed.

Additionally, a 2D transform with size $3 \cdot 2^n$ in width or height, and the subsequent transform coefficient entropy coding process are performed.

Other CU splitting modes, as illustrated in Figure 5, called the horizontal 510 and vertical 520 triple tree splitting modes, consist in dividing a CU into 3 sub-coding-units (sub-CUs), with respective sizes equal ¼, ½ and ¼ of the parent CU size in the direction of the considered spatial division.

SUMMARY

According to an aspect of the present disclosure, a method of video encoding is provided including accessing a set of reference samples used for prediction of a block in a picture of a video, processing the set of reference samples based on a shape of the block, generating a prediction block for the block based on the processed set of reference samples and encoding the block based on the prediction block.

According to an aspect of the present disclosure, an apparatus for video encoding is provided, the apparatus including means for accessing a set of reference samples used for prediction of a block in a picture of a video, means for processing the set of reference samples based on a shape of the block, means for generating a prediction block for the block based on the processed set of reference samples and means for encoding the block based on the prediction block.

According to an aspect of the present disclosure, an apparatus for video encoding is provided, the apparatus including a processor, and at least one memory coupled to the processor, the processor being configured to access a set of reference samples used for prediction of a block in a picture of a video, process the set of reference samples based on a shape of the block, generate a prediction block for the block based on the processed set of reference samples and encode the block based on the prediction block.

According to an aspect of the present disclosure, a bitstream formatted to include encoded data representative of a block of a picture, the encoded data encoded by accessing a set of reference samples used for prediction of a block in a picture of a video, processing the set of reference samples based on a shape of the block, generating a prediction block for the block based on the processed set of reference samples and encoding the block based on the prediction block.

According to an aspect of the present disclosure, a signal including a bitstream formatted to include encoded data representative of a block of a picture, the encoded data encoded by accessing a set of reference samples used for prediction of a block in a picture of a video, processing the set of reference samples based on a shape of the block, generating a prediction block for the block based on the processed set of reference samples and encoding the block based on the prediction block.

According to an aspect of the present disclosure, a method of video decoding is provided including accessing a set of reference samples used for prediction of a block in a picture of an encoded video, processing the set of reference samples based on a shape of the block, generating a prediction block for the block based on the processed set of reference samples and decoding the block based on the prediction block.

According to an aspect of the present disclosure, an apparatus for video decoding is provided, the apparatus including means for accessing a set of reference samples used for prediction of a block in a picture of an encoded video, means for processing the set of reference samples based on a shape of the block, means for generating a prediction block for the block based on the processed set of reference samples and means for decoding the block based on the prediction block.

According to an aspect of the present disclosure, an apparatus for video decoding is provided, the apparatus including a processor, and at least one memory coupled to the processor, the processor being configured to access a set of reference samples used for prediction of a block in a picture of an encoded video, process the set of reference samples based on a shape of the block, generate a prediction block for the block based on the processed set of reference samples and decode the block based on the prediction block.

According to an aspect of the present disclosure, a computer program product is provided including program code instructions for accessing a set of reference samples used for prediction of a block in a picture of a video, processing the set of reference samples based on a shape of the block, generating a prediction block for the block based on the processed set of reference samples and encoding the block based on the prediction block.

According to an aspect of the present disclosure, a computer program product is provided including program code instructions for accessing a set of reference samples used for prediction of a block in a picture of an encoded video, processing the set of reference samples based on a shape of the block, generating a prediction block for the block based on the processed set of reference samples and decoding the block based on the prediction block.

According to an aspect of the present disclosure, a computer-readable storage medium carrying a software program is provided including program code instructions for accessing a set of reference samples used for prediction of a block in a picture of a video, processing the set of reference samples based on a shape of the block, generating a prediction block for the block based on the processed set of reference samples and encoding the block based on the prediction block.

According to an aspect of the present disclosure, a computer-readable storage medium carrying a software program is provided including program code instructions for accessing a set of reference samples used for prediction of a block in a picture of an encoded video, processing the set of reference samples based on a shape of the block, generating a prediction block for the block based on the processed set of reference samples and decoding the block based on the prediction block.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

Additional features and advantages of the present disclosure will be made apparent from the following detailed description of illustrative embodiments which proceeds with reference to the accompanying figures.

BRIEF DESCRIPTION OF THE DRAWINGS

The present disclosure may be better understood in accordance with the following exemplary figures briefly described below:

Figure 1 illustrates a CTU split into CUs in accordance with the HEVC standard;
Figure 2 illustrates the splitting of a CTU into CUs, PUs and TUs in accordance with the HEVC standard;
Figure 3 illustrates a CTU in accordance with the QTBT tool;
Figure 4 illustrates a CU binary splitting mode in QTBT called asymmetric splitting mode;
Figure 5 illustrates the horizontal (left) and vertical (right) triple tree CU splitting modes in QTBT;
Figure 6 illustrates an exemplary set of CU splitting modes in accordance with an embodiment of the present disclosure;
Figure 7 illustrates a simplified block diagram of an exemplary video encoder in accordance with an embodiment of the present disclosure;
Figure 8 illustrates a simplified block diagram of an exemplary intra-prediction module in accordance with an embodiment of the present disclosure;
Figure 9 illustrates exemplary reference samples for a current block in accordance with the present disclosure;
Figure 10 illustrates a intra-prediction directions in accordance with the HEVC standard;
Figure 11 illustrates exemplary intra prediction modes for square block shapes in accordance with the HEVC standard;
Figure 12 illustrates exemplary intra prediction modes for rectangular block shapes in accordance with the present disclosure;
Figure 13 illustrates a flowchart of an exemplary method of video encoding in accordance with an embodiment of the present disclosure;
Figure 14 illustrates a simplified block diagram of an exemplary video decoder in accordance with an embodiment of the present disclosure;
Figure 15 illustrates a flowchart of an exemplary method of video decoding in accordance with an embodiment of the present disclosure; and
Figure 16 illustrates a block diagram of a computing environment within which aspects of the present disclosure can be implemented and executed.

DETAILED DESCRIPTION

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

It is to be understood that the figures and descriptions have been simplified to illustrate elements that are relevant for a clear understanding of the present disclosure, while eliminating, for purposes of clarity, many other elements found in typical encoding and/or decoding devices.

It will be understood that, although the terms first and second may be used herein to describe various elements, these elements should not be limited by these terms. These terms are only used to distinguish one element from another. Various methods are described above, and each of the methods comprises one or more steps or actions for achieving the described method. Unless a specific order of steps or actions is required for proper operation of the method, the order and/or use of specific steps and/or actions may be modified or combined.

It is to be understood that a picture may be an array of luma samples in monochrome format, or an array of luma samples and two corresponding arrays of chroma samples in 4:2:0, 4:2:2, and 4:4:4 color format or three arrays of three color components (e.g. RGB). In HEVC, a "block" addresses a specific area in a sample array (e.g., luma Y), and a "unit" includes the collocated block of all encoded color components (luma Y and possibly chroma Cb and chroma Cr), syntax elements and prediction data that are associated with the block (e.g., motion vectors). However, the term "block" is more generally used herein to refer to a block (e.g. a coding block (CB), transform block (TB), coding group (CG), etc.) or a unit (e.g. a CU).

It is to be understood that a picture or block of pixels or transform coefficients is a two-dimensional array or matrix. The horizontal or x direction (or axis) represents a width and the vertical or y direction (or axis) represents a height. The indexes start at 0. The x direction represents columns and the y direction represents rows. The maximum x index is the width - 1. The maximum y index is the height - 1.

In the following sections, the word "reconstructed" and "decoded" may be used interchangeably. Usually but not necessarily "reconstructed" is used on the encoder side while "decoded" is used on the decoder side. Also, the words "coded" and "encoded" may be used interchangeably. Moreover, the words "image", "picture", "frame" and slice (that is, a part of a picture) may be used interchangeably. Furthermore, the words "coding", "source coding" and "compression" may be used interchangeably.

The present disclosure is directed to prediction in video coding and decoding. Intra prediction in video compression refers to the spatial prediction of a block of pixels using the information from the causal neighbor blocks, that is, the neighboring blocks in the same frame which have already been decoded. This is a powerful coding tool since it allows for high compression efficiency in intra frames, as well as in inter frames whenever there is no better temporal prediction. Therefore, intra prediction has been included as a core coding tool in video compression standards including H.264/Advanced Video Coding (AVC), H.265/HEVC, etc. In HEVC intra prediction, a CU is spatially predicted from the causal neighbor CUs, i.e., the CUs on the top and top-right, the CUs on the left and left-bottom, and the top-left CU.

In particular, the present disclosure is directed to smoothing filtering of reference samples. In the HEVC and older video coding standards, intra prediction of a target block uses filtered references samples. Specifically, reference samples may be, e.g., decoded row(s) of pixels (or samples) on the top, and column(s) of pixels on the left, of the current block. Based on the decoded pixel values in these CUs, the encoder constructs different predictions for the target block and chooses the one that leads to the best RD performance.

In HEVC, the target block size has been increased to 64x64 to support the compression of high resolution video. Corresponding to the block size, the number of intra prediction modes has been increased to 35, out of which one is a planar mode (indexed as mode 0), one is a DC mode (indexed as mode 1) and the remaining 33 (indexed as mode 2-34) are directional or angular modes. More recently, rectangular blocks and block sizes up to 256x256 with up to 131 prediction modes are being explored.

In HEVC and some previous video coding standards, the intra prediction mode is signaled for every CU. Reference samples are filtered, depending on block sizes. Prediction modes and filters are signaled (e.g., Position Dependent Prediction Combination (PDPC) or Reference Sample Adaptive Filtering (RSAF)).

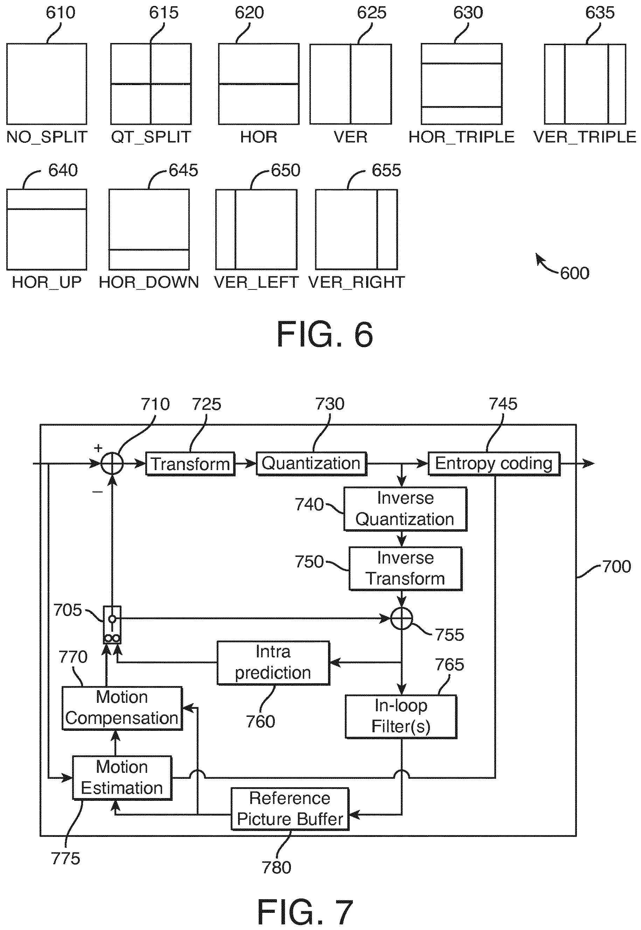

Figure 6 illustrates an exemplary set of CU splitting modes according to the present disclosure. The rich set of CU topologies result in coding structures that spatially match the structures and discontinuities contained in the images of a bitstream. With rectangular block shapes (instead of the traditional square shapes), it is of interest to reduce the number of signaling flags by activating some prediction modes and filters depending on block shape (e.g., horizontal or vertical rectangular block) as well as, e.g., on intra prediction direction.

The present disclosure addresses some disadvantages present in the prior art. In particular, in at least some embodiments of the present disclosure, having shape-dependent modes can lead to better prediction and hence higher coding gain. Although the description generally relates to intra-prediction, similar concepts may apply to inter-prediction without departing from the scope of the present disclosure. In particular, similar concepts may apply to filtering of reference samples used for intra-prediction and/or for inter-prediction modes.

Encoding

Figure 7 illustrates a simplified block diagram of exemplary video encoder 700 in accordance with an embodiment of the present disclosure. The encoder 700 may be included in a transmitter or headend in a communication system. To encode a video sequence with one or more pictures, a picture may be partitioned into CTUs of square shape with a configurable size. A consecutive set of CTUs may be grouped into a slice. A CTU is the root of a QTBT partitioning into CUs. In the exemplary encoder 700, a picture is encoded by the encoder modules as described below. Each block is encoded using either an intra mode or inter mode. When a block is encoded in an intra mode, the encoder 700 performs intra prediction (module 760) or spatial prediction, based on at least one block in the same picture or frame. When a block is encoded in an inter mode, the encoder 700 performs inter prediction or temporal prediction, based on at least one reference block from at least one reference picture or frame. In uni inter-prediction, the prediction may be generally (but not necessarily) based on an earlier reference picture or frame. In bi inter-prediction, the prediction may be generally (but not necessarily) based on an earlier and a later picture or frame. In an inter mode, motion estimation (module 775) and compensation (module 770) are performed. The encoder decides (module 705) which one of the intra mode or inter mode to use for encoding the block, and indicates the intra/inter decision by a prediction mode flag. Residuals are calculated by subtracting (module 710) a predicted sample block (also known as a predictor) from the original image block.

As an example, blocks in intra mode are predicted from reconstructed neighboring samples. Inter prediction is performed by performing motion estimation (module 775) and motion-compensating (in module 770) a reference block stored in a reference picture buffer 780. The motion estimation module 775 may include motion compensation since its purpose is to determine the best motion vectors which may use an iterative search that typically terminates when the rate-distortion cost (RD cost) is low enough, or has reached a minimum.

The residuals are transformed (module 725) and quantized (module 730). The transform module 725 may transform the image from the pixel or time domain to the transform or frequency domain. The transform may be, e.g., a cosine transform, a sine transform, a wavelet transform, etc. Quantization may be performed according to, e.g., a rate distortion criterion. The quantized transform coefficients, as well as motion vectors and other syntax elements, are entropy coded (module 745) to output a bitstream. The entropy coding may be, e.g., Context Adaptive Binary Arithmetic Coding (CABAC), Context Adaptive Variable Length Coding (CAVLC), Huffman, arithmetic, exp-Golomb, etc. The encoder may also skip the transform and apply quantization directly to the non-transformed residual signal. The encoder may also bypass both transform and quantization, i.e., the residual is coded directly without the application of the transform or quantization process. In direct PCM coding, no prediction is applied and the block samples are directly coded into the bitstream.

The encoder comprises a decoding loop and thus decodes an encoded block to provide a reference for further predictions. The quantized transform coefficients are de-quantized (module 740) and inverse transformed (module 750) to decode residuals. An image block is reconstructed by combining (module 755) the decoded residuals and the predicted sample block. An in-loop filter (765) may be applied to the reconstructed picture, for example, to perform deblocking/Sample Adaptive Offset (SAO) filtering to reduce coding artifacts. The filtered image is stored in the reference picture buffer 780.

The modules of video encoder 700 may be implemented in software and executed by a processor, or may be implemented using circuit components well-known by one skilled in the art of compression. In particular, video encoder 700 may be implemented as an integrated circuit (IC).

The modules of video encoder 700 may also be present in other video encoders (e.g., HEVC encoders), except for the differences described in the present disclosure, particularly, differences in module intra-prediction 760, , and/or differences in inter-prediction modules 770, 775, as will be described in greater detail in the following paragraphs and figures. For functionalities other than intra-prediction 760 and/or inter-prediction 770, 775, video encoder 700 may be similar to an HEVC video encoder and the functionalities are not herein described in detail.

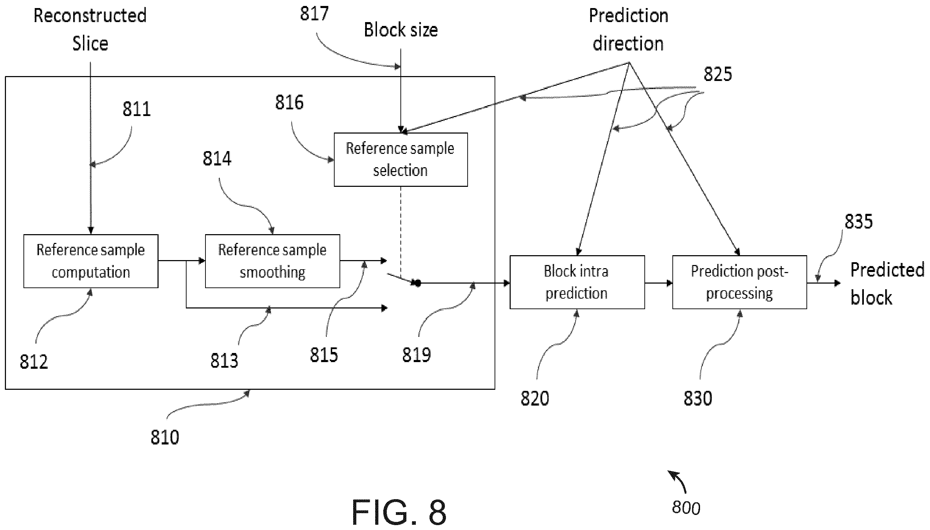

Figure 8 illustrates a simplified block diagram 800 of an exemplary intra-prediction module in accordance with an embodiment of the present disclosure. Intra-prediction module 800 may be similar to intra-prediction module 760 of Figure 7. The intra-prediction module 800 receives reconstructed blocks 811 and outputs predicted blocks 835. Intra-prediction module 800 includes three modules: reference sample generation module 810, block intra prediction module 820 and prediction post-processing module 830.

In reference sample generation module 810, reference samples 813 may be first computed or determined from the reconstructed neighboring blocks of a current block in reference sample computation module 812. At this stage, reference pixel or sample values may be copied in a first reference sample buffer, with padding of bottom-left pixels or top-right pixels if they are not available. Next, a filtered reference samples/buffer 815 may be computed as a smoothed version of the original reference samples/buffer 813 in reference sample smoothing module 814. Module 814 may alternately be bypassed. Then, depending on selection parameters 817, reference samples are selected 819 from either original reference samples 813 or filtered reference samples 815 in reference sample selection module 816. Next, in module intra-prediction 820, the prediction is performed to compute the intra-prediction of the current block from the selected reference samples/buffer 819. Finally, depending on the prediction direction, post-processing (e.g., filtering) may be applied on the intra-block prediction in prediction post-processing module 830, to output the predicted block 835. The post-processing module 830 may be bypassed or removed.

The modules of intra-prediction module 800 may also be present in other video encoders (e.g., HEVC encoders), except for the differences described in the present disclosure, particularly, differences in modules 816, 820 and 830 and selection parameters 817 as will be described in greater detail in the following paragraphs and figures. For example, in the HEVC standard, the selection parameters in 817 are a number of pixels of the current block (e.g., block size) and a determined prediction direction. In addition, in the HEVC standard, modules 820 and 830 are a function of the determined prediction direction. According to the present disclosure, a block shape (e.g., horizontal or vertical rectangular) may be a selection parameter 817 and may also influence modules 816, 820 and 830 as well, as will be described in greater detail in the following paragraphs and figures.

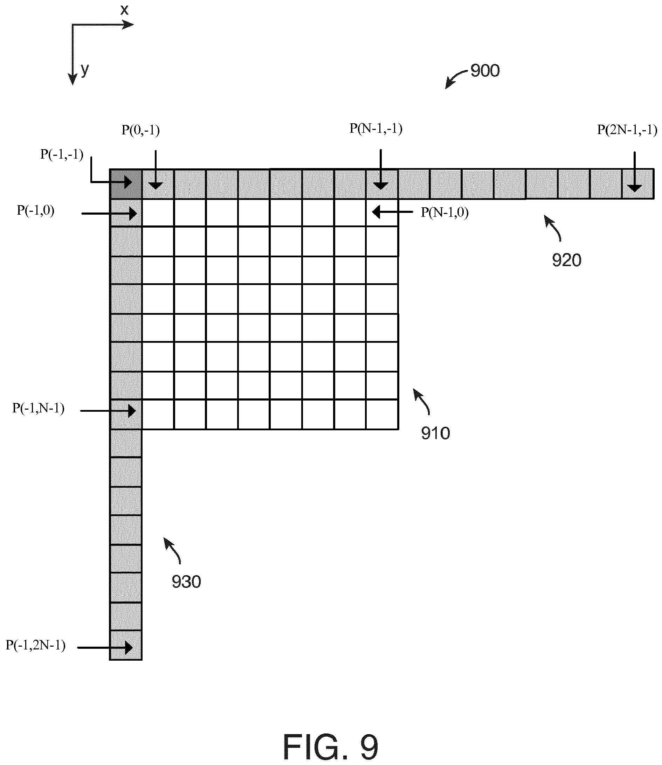

Figure 9 illustrates exemplary reference samples (920, 930) for a current block 910 in accordance with the present disclosure. Figure 9 is also applicable to the HEVC standard. For a current block 910 of size N×N (i.e., horizontal (x) versus vertical (y) directions), a row of 2N (i.e., 2*N) reconstructed reference samples on the top 920 may be formed from the previously reconstructed top and top right reference pixels to the current block 910, in module 812 of Figure 8. The top reference samples 920 include samples P(0, -1), ..., P(N-1, -1), ..., P(2N-1, - 1). Similarly, a column of 2N samples on the left 930 may be formed from the reconstructed left and below left reference pixels to the current block 910. The left reference samples 930 include samples P(-1, 0), ..., P(-1,N-1),..., P(-1,2N-1). The corner pixel at the top-left position, P(-1, -1), is also used to fill up the gap between the top row and the left column references. If some of the samples on top or left are not available, because of the corresponding reference blocks not being in the same slice, or the current block being at a frame boundary, etc., then a method called reference sample substitution may be performed where the missing samples are copied from the available samples in a clock-wise direction.

According to the present disclosure, the block size does not need to be restricted to N×N (i.e., square blocks) and may be M×N (i.e., general rectangular blocks, including square blocks), where M is equal to or different from N. For a general block size of M×N, there may be a row of 2M reconstructed reference samples on the top and a column of 2N reconstructed reference samples on the left of the current block.

Intra sample prediction is performed in module 820 of Figure 8 and consists of predicting the pixels of the target CU based on the reference samples. As previously mentioned, in order to predict different kinds of content efficiently, HEVC supports a range of prediction models. Planar and DC prediction modes are used to predict smooth and gradually changing regions, whereas angular prediction modes are used to capture different directional structures. HEVC supports 33 directional prediction modes which are indexed from 2 to 34. The directional prediction modes correspond to different prediction directions.

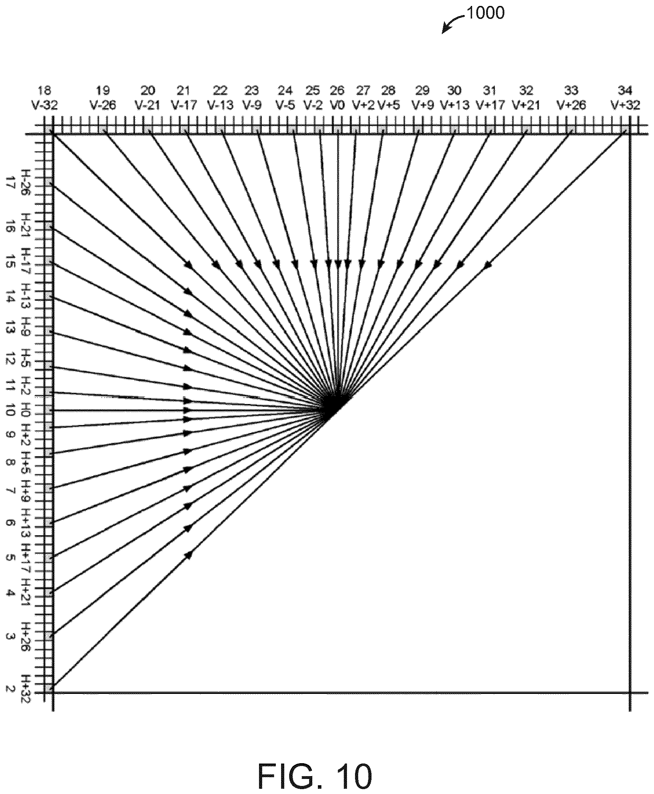

Figure 10 illustrates intra-prediction directions in accordance with the HEVC standard and also in accordance with the present disclosure. However, the present disclosure is not limited to the HEVC directions. The numbers 2 to 34 denote the prediction mode index associated with the corresponding direction. The modes 2 to 17 indicate horizontal predictions (H-26 to H+32) and the modes 18 to 34 indicate vertical predictions (V-32 to V+32). The symbols "H" and "V" in Figure 10 are used to indicate the horizontal and vertical directionalities, respectively, while the numeric part of the identifier indicates the pixels' displacement (also referred to as "angle parameter").

The angle parameter A, which indicates the position of the reference sample (at a resolution of 1/32 of a pixel) from a target pixel on the first row or first column. The values A for different prediction modes are shown in the tables 1 and 2.

Table 1

| Horizontal directions | | | | | | | | | | | | | | | | |
|---|---|---|---|---|---|---|---|---|---|---|---|---|---|---|---|---|
| Mode index | 2 | 3 | 4 | 5 | 6 | 7 | 8 | 9 | 10 | 11 | 12 | 13 | 14 | 13 | 16 | 17 |
| A | 32 | 26 | 21 | 17 | 13 | 9 | 5 | 2 | 0 | -2 | -5 | -9 | -13 | -17 | -21 | -26 |

Table 2

| Vertical directions | | | | | | | | | | | | | | | | |
|---|---|---|---|---|---|---|---|---|---|---|---|---|---|---|---|---|
| Mode index | 18 | 19 | 20 | 21 | 22 | 23 | 24 | 25 | 26 | 27 | 28 | 29 | 30 | 31 | 32 | 33 | 34 |
| A | -32 | -26 | -21 | -17 | -13 | -9 | -5 | -2 | 0 | 2 | 5 | 9 | 13 | 17 | 21 | 26 | 32 |

The directions with non-negative displacements (i.e., H0 to H+32 and V0 to V+32) are also denoted as positive directions, and the directions with negative displacements (i.e., H-2 to H-26 and V-2 to V-32) are also denoted as negative directions. Positive prediction direction may also be defined as direction having positive A value, and negative prediction direction may be defined as direction having negative A values.

As shown in Figure 10, the defined angular directions have a sample accuracy of 1/32. That is, the interval between two pixels, either in horizontal or vertical directions, is divided into 32 subintervals. As described above, the defined directions can be distinguished as either vertical or horizontal. The prediction modes in horizontal directions use either only left reference samples, or some left and some top reference samples. Similarly, the prediction modes in vertical directions use either only top reference samples, or some top and some left reference samples. The horizontal positive directions from H0 to H+32 use only the left reference samples for prediction. Similarly, the vertical positive directions from V0 to V+32 use only the top reference samples for prediction. Negative horizontal and vertical directions (H-2 to H-26 and V-2 to V-32) use reference samples both on the left and on the top for prediction.

In the HEVC reference code, a reference array is first constructed using the top and left reference samples. For vertical predictions, the reference array is horizontal and for horizontal predictions, the reference array is vertical. For the modes with positive angle parameter A (modes 2 to 10 and 26 to 34), the reference array is simply the top or left reference samples depending on the direction:

$$topRef[x] = P[x-1][-1], 0 \le x \le 2N, \text{ for vertical predictions} \qquad (1)$$

$$leftRef[y] = P[-1][y-1], 0 \le y \le 2N, \text{ for horizontal predictions} \qquad (2)$$

where N is the CU size. It is conventional to initialize the sample co-ordinates to (0,0) at the top-left pixel of the target CU. Therefore, the top reference samples will have their y-coordinate as -1 and the left reference samples will have their x-coordinate as -1.

For the modes with negative angle parameter A (modes 11 to 25), the reference array needs pixels from both the top and left references. In this case, the reference array will further extend to the negative indices beyond -1. Sample values on the reference array with positive indices are obtained as above depending on vertical or horizontal prediction. Those on the reference array with negative indices are obtained by projecting the left reference pixels (for vertical predictions) or top reference pixels (for horizontal predictions) on the reference array along the prediction direction.

Once the reference array is constructed, the prediction at any pixel position ($x, y$) inside the target CU is obtained by projecting the pixel position to the reference array along the selected direction and then copying the reference array sample value at ($x, y$). The reference sample value is computed at a sample resolution of (1/32) by interpolating between two adjacent samples as illustrated below:

$$P[x][y] = \big((32 - f) * topRef[x + i + 1] + f * topRef[x + i + 2] + 16\big) \gg 5), 0 \le$$

$$x, y < N, \text{ for vertical predictions} \qquad (3)$$

$$P[x][y] = \big((32 - f) * leftRef[y + i + 1] + f * leftRef[y + i + 2] + 16\big) \gg 5), 0 \le$$

$$x, y < N, \text{ for horizontal predictions} \qquad (4)$$

where $i$ and $f$ denote the integral part and the fractional part of the projected displacement from the pixel location $(x, y)$ and » denotes a bit shift operation to the right. If $\Delta$ denotes the projected displacement, then

$$\Delta = (x + 1) * A, \text{ for horizontal predictions} \qquad (5)$$

$$\Delta = (y + 1) * A, \text{ for vertical predictions} \qquad (6)$$

The integral and fraction parts of the displacement are then obtained as follows:

$$i = \Delta \gg 5 \qquad (7)$$

$$f = \Delta \,\&\, 31 \qquad (8)$$

where & denotes a bitwise AND operation. Note that, if $f = 0$, i.e., there is no fractional part, then the prediction is equal to the reference array sample value in the direction of prediction. In this case, there is no need of interpolation.

Some of the prediction modes such as the DC mode, and directly horizontal (H0 or 10) and vertical modes (V0 or 26) may cause discontinuity at the CU boundaries after the prediction. Therefore, in HEVC, as well as in the present disclosure, such prediction modes are followed by a post-processing step performed by post-processing module 830 of Figure 8, where the boundary predicted samples are smoothed using a low-pass filter.

As previously mentioned, for constructing the prediction for a target block, the encoder (and the decoder) may use only one row of reference samples on the top and one column of reference samples on the left of the block. The reference samples in Figure 9, being the closest to the target block carry the maximum amount of correlation with the target block content, and therefore using additional decoded rows and columns has not been thought necessary due to higher complexity and memory requirements. But this logic is applicable when the target block sizes are small and there are only a few angular prediction modes. As the block size and the number of prediction modes are increased, the prediction from one reference row and column can be made more accurate by using directional information from additional reference rows and columns.

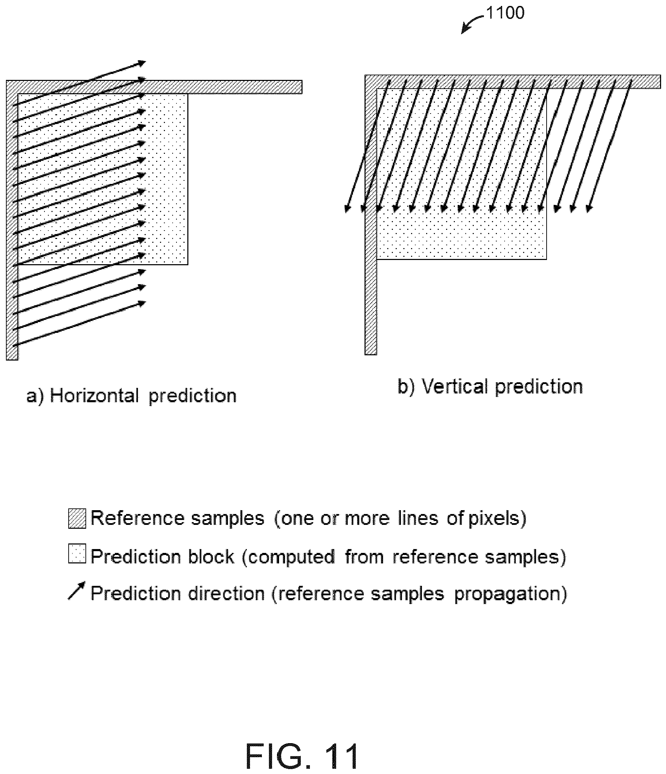

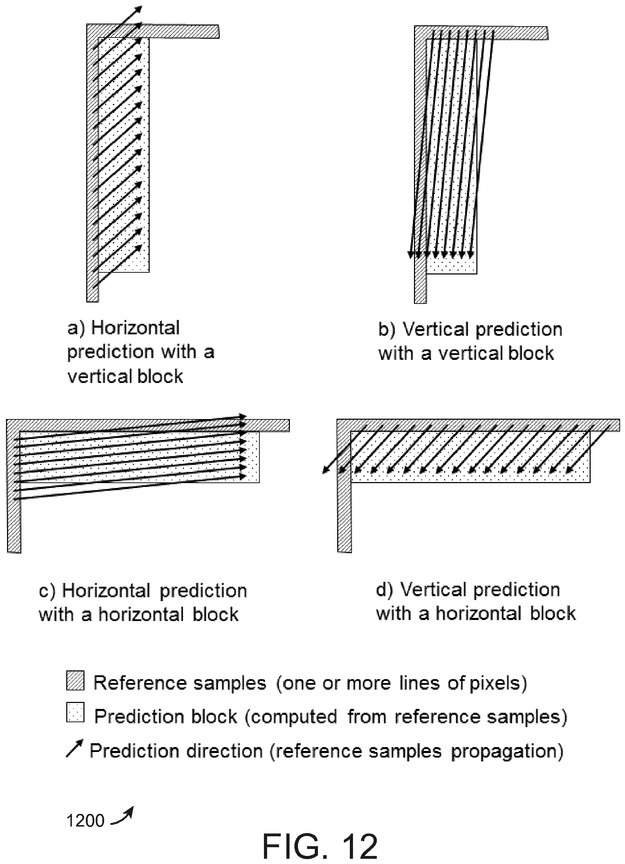

Since blocks may not be square any longer, the shape of rectangular blocks may be disproportionately narrow in the horizontal or vertical direction. Therefore, the performance of prediction modes and filtering of reference samples may be biased depending on the block shape, as shown by comparison of Figures 11 and 12.

Figure 11 illustrates exemplary intra prediction modes for square block shapes in accordance with the HEVC standard. Drawing 1100 shows: a) a horizontal prediction example and b) a vertical prediction example, with respective prediction directions. It may be observed that the block shape and the prediction direction are not discriminant, that is, there is a similarity between horizontal and vertical predictions for a square shape. The same applies to intra prediction modes for square block shapes in accordance with the present disclosure.

Figure 12 illustrates exemplary intra prediction modes for rectangular block shapes in accordance with the present disclosure. Drawing 1200 shows: a) a horizontal prediction example for a vertical rectangular block, b) a vertical prediction example for a vertical rectangular block, c) a horizontal prediction example for a horizontal rectangular block and d) a vertical prediction example for a horizontal rectangular block, with respective prediction directions. It may be observed that in examples a) and d), the predicted pixels are close to the reference samples. However, in cases b) and c), the predicted pixels are far away from the reference samples, which is undesirable, given that correlation tends to decrease with distance.

In addition, propagating strong edges that are not aligned with the block structures or texture may result in high frequencies in the residual, and thus a costly residual to encode. In order to accomplish a good balance between generating an accurate prediction and avoiding erroneous strong edges, it is useful to low-pass filter the reference samples in some cases. In the HEVC standard, intra reference samples are filtered depending on the absolute value of the (minimum) angle between purely horizontal or vertical directions and the intra prediction direction (module 814). A threshold or value depends on the block size (number of pixels in the block). The threshold or value is independent of the block shape. If the angle is larger than this threshold or value, a reference sample smoothing filter is applied.

As a result, the reference samples used for the intra prediction are sometimes filtered by a three-tap [1 2 1]/4 smoothing filter. The HEVC standard applies smoothing operations adaptively, according to the directionality and the block size. The smoothing filter is not applied for 4x4 blocks. For 8x8 blocks, only the diagonal directions (i.e., Intra-Angular[k] with k = 2, 18, or 34) use the reference sample smoothing. For 16x16 blocks, the reference samples are filtered for most directions except the near-horizontal and near-vertical directions (i.e., k in the range of 9-11 and 25-27). For 32x32 blocks. all directions except the exactly horizontal (k = 10) and exactly vertical (k = 26) directions use the smoothing filter. The Intra-Planar mode also uses the smoothing filter when the block size is greater than or equal to 8x8, and the smoothing is not used (or useful) for the Intra-DC case.

According to the present disclosure, it is thus desirable to determine the intra prediction mode based on the block shape. In addition, it is desirable to determine filtering tools based on the block shape and possibly the intra-prediction direction.

In one embodiment according to the present disclosure, a function, characteristic or condition is determined depending on or associated with the block shape for enabling or disabling reference smoothing filtering (module 810). The smoothing filtering may be a low pass filtering process. The smoothing filtering may be performed by similar filters utilized in the HEVC standard. The function or characteristic may be defined as a width of the block for a horizontal rectangular block, a height of the block for a vertical rectangular block and width or height of the block, for a square block. The function or characteristic may be equivalently defined as, e.g., a largest dimension of the block and applied to reference smoothing filtering. In one embodiment, if the largest dimension is the width of the block (e.g., a horizontal rectangular block, as in Figure 12, items "c" and "d"), then at least one vertical intra-prediction mode (V in Figure 10) may be disabled for reference smoothing filtering (810) of the set of reference samples associated with the block. If the largest dimension is the height of the block (e.g., a vertical rectangular block, as in Figure 12, items "a" and "b"), then at least one horizontal intra-prediction mode (H in Figure 10) may be disabled for reference smoothing filtering (810) of the set of reference samples associated with the block. Otherwise, if both the width and height of the block have similar dimensions, horizontal and vertical intra-prediction modes may be enabled for reference smoothing filtering (810) of the set of reference samples associated with the block.

In other words, if the prediction directionality (horizontal or vertical) is the same as the block shape (as defined by the largest dimension, for example, horizontal prediction and width > height, or vertical prediction and width < height, cases "c" and "b" in Figure 12), then the prediction is considered long. Otherwise (cases "a" and "d" in Figure 12), the prediction is considered short. For short predictions, at least one intra-directional prediction mode may be disabled for reference smoothing filtering (810).

In one embodiment, for short predictions, the reference sample smoothing filter may be disabled. For example, reference smoothing filtering is only applied for items "b" and "c" in Figure 12.

In one embodiment according to the present disclosure, the function, characteristic or condition may be defined as a diagonal of said block. In one embodiment, the function, characteristic or condition may be defined as a weighted sum of the dimensions of the block, e.g., 2*width + height. In one embodiment, other more complex functions may be devised that enable a distinction of different shapes of the block.

In one embodiment according to the present disclosure, the function, characteristic or condition may include a comparison against a shape threshold/value or range of values associated with the shape of the block. In one embodiment, a shape threshold/value or range of values may be associated with the block width if the prediction is horizontal, or with the block height if the prediction is vertical. In other words, a shape threshold/value or range of values may be associated with the largest dimension of the block. For example, if the largest dimension of the block is greater than shape threshold p= 4 then the reference smoothing filter may be applied.

In one embodiment according to the present disclosure, the function, characteristic or condition may further include a comparison against a direction threshold/value or range of values associated with the prediction direction of the block. For example, if the largest dimension of the block is greater than shape threshold p= 4 and the prediction mode index, k, is less than 10 for a horizontal rectangle block or greater than 26 for a vertical rectangle block, then the reference smoothing filter may be applied.

In one embodiment according to the present disclosure, more complex functions of the block shape and prediction direction of the block may be established. For example, the shape threshold may depend on prediction direction: for horizontal directions, the filter is applied if block width is larger than p, with p=4, for k=9 to 11, and p=16 for k < 18, meaning p=16 for almost all horizontal directions except for k=9 to 11 where p=4. For vertical directions, the filter is applied if block height is larger than p, with p=4 for k=25 to 27, and p=16 for k > 18 meaning p=16 for almost all vertical directions except for k=25 to 27 where p=4.

In one embodiment, at least one flag may be included and optionally encoded in the bitstream (e.g., as syntax elements) to indicate the shape threshold(s) or value(s) for at least one of a current picture, slice or block. The at least one flag may be retrieved at the decoder and used to decode the encoded block.

In one embodiment according to the present disclosure, prediction, residual, transform and coding may be performed both with and without reference sample smoothing filtering. Between the two options, one may select the option that results in better rate-distortion (RD) performance.

In one embodiment, at least one flag may be included and optionally encoded in the bitstream (e.g., as syntax elements) to indicate whether reference sample smoothing filtering is enabled/disabled for at least one of a current picture, slice or block. The at least one flag may be retrieved at the decoder and used to decode the encoded block.

In one embodiment, one may signal the selected prediction to the decoder using a one-bit flag at the CU level. The flag may be encoded with CABAC, using a context depending on prediction direction and block shape. For example, one may use context 1 if prediction is horizontal and width>height or prediction is vertical and height>width, and context 2 otherwise. The flag may be retrieved at the decoder and used to decode the encoded block.

In one embodiment according to the present disclosure, a function, characteristic or condition is determined depending on the block shape for enabling or disabling intra-prediction modes (modules 820, 830). The function or characteristic may be defined, e.g., as a largest dimension of the block and applied to intra-prediction. In one embodiment, if the largest dimension is the width of the block (e.g., a horizontal rectangular block, as in Figure 12, items "c" and "d"), then at least one vertical intra-prediction mode may be disabled for generating an intra-prediction (820,830) associated with the block. If the largest dimension is the height of the block (e.g., a vertical rectangular block, as in Figure 12, items "a" and "b"), then at least one horizontal intra-prediction mode may be disabled for generating an intra-prediction (820,830) associated with the block. Otherwise, if both the width and height of the block have similar dimensions, horizontal and vertical intra-prediction modes may be enabled for generating an intra-prediction (820,830) associated with the block.

In other words, if the prediction is short, then at least one prediction mode may be disabled for intra-prediction (820, 830).

In one embodiment, for short predictions, all (vertical or horizontal) prediction modes may be disabled. For example, horizontal rectangular blocks are only horizontally predicted (item "c" in Figure 12) and vertical rectangular blocks are only vertically predicted (item "b" in Figure 12).

In one embodiment according to the present disclosure, the function, characteristic or condition may include a comparison against a shape threshold/value or range of values associated with the shape of the block. In one embodiment, a shape threshold/value or range of values may be associated with the block width if the prediction is horizontal, or with the block height if the prediction is vertical. In other words, a shape threshold/value or range of values may be associated with the largest dimension of the block. For example, the function, characteristic or condition may be the largest dimension of the block being greater than shape threshold p= 4. If the condition is true, then at least one intra-prediction mode is allowed/selected for the block, slice or picture. In one example, even prediction directions (indices) are available only when the condition of the block shape is true. In another example, one out of 4 (multiple of 4) prediction directions (indices) are available only when the condition is true.

In one embodiment according to the present disclosure, the function, characteristic or condition may further include a comparison against a direction threshold/value or range of values associated with the prediction direction of the block. For example, the function, characteristic or condition may be the largest dimension of the block being greater than shape threshold p= 4 and the prediction mode index, k, being less than 10 for a horizontal rectangle block or greater than 26 for a vertical rectangle block. If the condition is true, then at least one intra-prediction mode is allowed/selected for the block, slice or picture. In one example, even prediction directions (indices) are available only when the condition of the block shape is true. In another example, one out of 4 (multiple of 4) prediction directions (indices) are available only when the condition is true.

In one embodiment according to the present disclosure, more complex functions of the block shape and prediction direction of the block may be established. If the condition is true, then at least one intra-prediction mode is allowed/selected for the block, slice or picture. In one example, even prediction directions (indices) are available only when the condition of the block shape is true. In another example, one out of 4 (multiple of 4) prediction directions (indices) are available only when the condition is true.

In one embodiment according to the present disclosure, any of the embodiments above associated with intra-prediction modes (820,830) apply to PDPC index coding. In another embodiment, any of the embodiments above apply to RSAF index coding. In yet another embodiment, any of the embodiments above apply to multiple reference samples switching. i.e. if the condition is not met, single-row or single-column reference as in HEVC is used for intra-prediction, otherwise multiple reference prediction is used. Multi-reference intra prediction refers to the intra prediction using multiple rows and columns of reference pixels. It is also called arbitrary tier reference intra prediction or multi-line intra prediction. In a known case, it is proposed to use weighted multiple references, with weights associated to each reference line (or layer).

As a variant, the condition may apply to any of the coding tools described in the embodiments above associated with intra-prediction (PDPC, RSAF, multiple sample references). When the condition is met, the tool (i.e., the prediction method) is always used, and not used otherwise. In another variant, when the condition is met, the encoder chooses to use or not the tool (with classical RDO loop), and transmit a flag whether the tool has been used or not; otherwise (if the condition hasn't been met), the tool is not used.

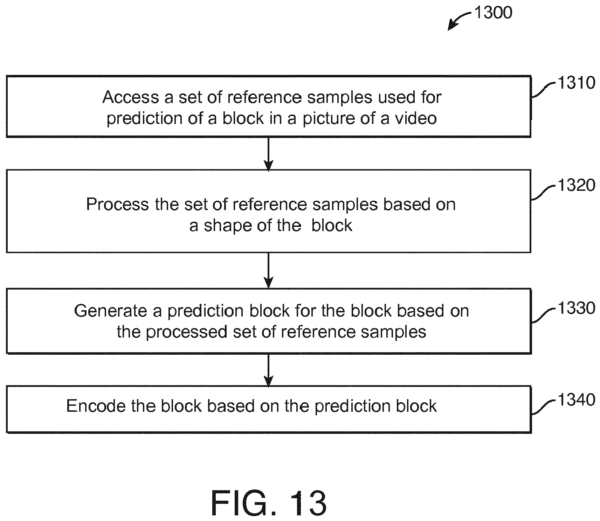

Figure 13 illustrates a flowchart 1300 of an exemplary method of video encoding in accordance with one embodiment of the present disclosure. The method 1300 includes, at step 1310, accessing a set of reference samples used for prediction of a block in a picture of a video. Then, at step 1320, the method 1300 includes processing the set of reference samples based on a shape of the block. Next, at step 1330, the method 1300 includes generating a prediction block for the block based on the processed set of reference samples. Finally, at step 1340, the method 1300 includes encoding the block based on the prediction block. Steps 1310 to 1340 may be performed, e.g., by encoder 700 (e.g., 760, 770,775), including module 800. In particular steps 1310 to 1330 may be performed by, e.g., module 760, 800, 770,775, including module 810 for step 1320 and modules 820, 830 for step 1330. The block shape may be, e.g., one of a square shape, vertical rectangular shape and horizontal rectangular shape.

According to one embodiment of the method, the prediction may be an intra-prediction or an inter-prediction.

According to one embodiment of the method, the processing may be enabled or selected when a function or characteristic of the block shape or associated with the block shape is greater than a value or threshold. Hence the condition is true when the function or characteristic is greater than a value or threshold. In one embodiment, the processing may be disabled or not selected when a function or characteristic is smaller than or equal to a value.

According to one embodiment of the method, the function or characteristic of the block shape or associated with the block shape may be a largest dimension of the block. In one embodiment, the largest dimension is the block width when the block shape is a horizontal rectangular shape; the largest dimension is the block height when the block shape is a vertical rectangular shape; the largest dimension is either a block weight or block height when the block shape is a square.

According to one embodiment of the method, the function or characteristic may be a diagonal length of the block.

According to one embodiment of the method, the function or characteristic may be a weighted sum of dimensions of the block (e.g., 2*weight + height).

According to one embodiment of the method, the processing may be further based on a prediction mode. In one embodiment, the processing may be further based on a directionality mode of prediction for the block.

According to one embodiment of the method, the processing may be enabled or selected for at least one prediction mode when the function or characteristic is greater than the value. For example, the processing may be enabled for horizontal prediction modes in horizontal rectangular blocks and vertical prediction modes in vertical rectangular blocks.

According to one embodiment of the method, for non-square blocks, the processing may be disabled or not selected for at least one directional prediction mode in a direction of the smallest dimension of the block. For example, the processing may be disabled for horizontal prediction modes in vertical rectangular blocks, and/or vertical prediction modes in horizontal rectangular blocks.

According to one embodiment of the method, at least one flag is included in the encoded video, the at least one flag indicating at least one of the value and whether the processing is enabled. The flag may be retrieved at the decoder prior to or during prediction.

According to one embodiment of the method, the processing includes smoothing filtering the set of reference samples. The smoothing filtering may be a low pass filtering.

According to one embodiment of the method, the prediction is based on the block shape. In one embodiment, at least one prediction mode (e.g., an intra-prediction direction) is allowed for at least one block shape. In one embodiment, at least one prediction mode is not allowed for at least one block shape. In one embodiment, at least one prediction mode is enabled or disabled when a condition of the block shape is true, as previously described.

It is to be understood that method 1300 also applies to any of the additional embodiments and examples previously described in the present disclosure.

According to one embodiment, the method may further include receiving the picture, partitioning the picture into a plurality of blocks including the block, determining a prediction residual for the block, transforming and quantizing the residual to obtain a plurality of transform coefficients and entropy encoding the transform coefficients. The steps of transforming and quantizing may be performed by, e.g., modules 725 and 730 of encoder 700. The step of entropy encoding may be performed by, e.g., module 745 of encoder 700. The steps of receiving, transforming and quantizing may be optional, bypassed or removed, since they may have been previously performed by another device and/or the results may have been stored in memory.

It is to be understood that any of the embodiments of the method 1300 described above may be implemented by encoder 700 (e.g., 760, 770,775), including intra-prediction module 800. The blocks of encoder 700, including intra-prediction module 800 may be implemented by hardware (e.g., integrated circuits) or in software, stored in memory and executed by a processor.

Decoding

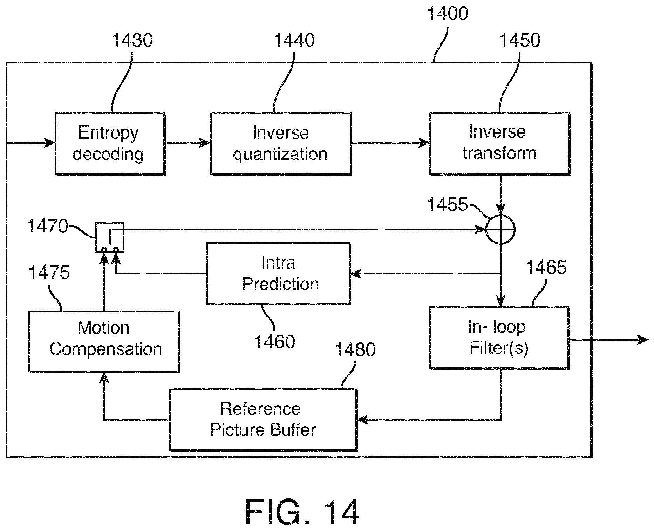

Figure 14 illustrates a simplified block diagram of an exemplary video decoder 1400 in accordance with an embodiment of the present disclosure. The video decoder 1400 may be included in a receiver in a communication system. Video decoder 1400 generally performs a decoding pass reciprocal to the encoding pass performed by the video encoder 700 as described in Figure 7, although not all operations in the decoder are inverse operations of the encoding process (e.g., intra and inter prediction). In particular the input of the decoder 1400 includes a video bitstream, which may be generated by the video encoder 700. The bitstream is first entropy decoded (module 1430) to obtain transform coefficients, motion vectors, syntax elements and other coded information. The transform coefficients are de-quantized (module 1440) and inverse transformed (module 1450) to decode residuals. The decoded residuals are then combined (module 1455) with a predicted sample block (also known as a predictor) to obtain a decoded/reconstructed image block. The encoder decides (e.g., module 705) which one of the intra mode or inter mode to use for encoding the block, and indicates the intra/inter decision by a prediction mode flag. The predicted sample block may be obtained (module 1405) from intra prediction (module 1460) or motion-compensated prediction (i.e., inter prediction) (module 1470). An in-loop filter (module 1465) may be applied to the reconstructed image. The in-loop filter may comprise a deblocking filter and a SAO filter. The filtered image is stored in a reference picture buffer 1480.

The modules of video decoder 1400 may be implemented in software and executed by a processor, or may be implemented using circuit components well-known by one skilled in the art of compression. In particular, video encoder 1400 may be implemented as an integrated circuit (IC), alone or combined with video decoder 700 as a codec.

The modules of video decoder 1400 are also present in other video decoders (e.g., HEVC decoders), except for the differences described in the present disclosure, particularly, differences in intra-prediction module 1460 as in module 760 of Figure 7, or differences in inter-prediction module 1475 as in modules 770, 775 of Figure 7, according to the present disclosure, and as will be described in greater detail in the following paragraphs and figures. For functionalities other than intra-prediction module 1460 and/or inter-prediction 1475, video decoder 1400 may be similar to an HEVC video decoder and the functionalities are not herein described in detail.

In addition, intra-prediction module 1460 may be similar to intra-prediction modules 760 in Figure 7 and 800 in Figure 8. And motion compensation module 1470 may be similar to motion compensation module 770 of Figure 7.

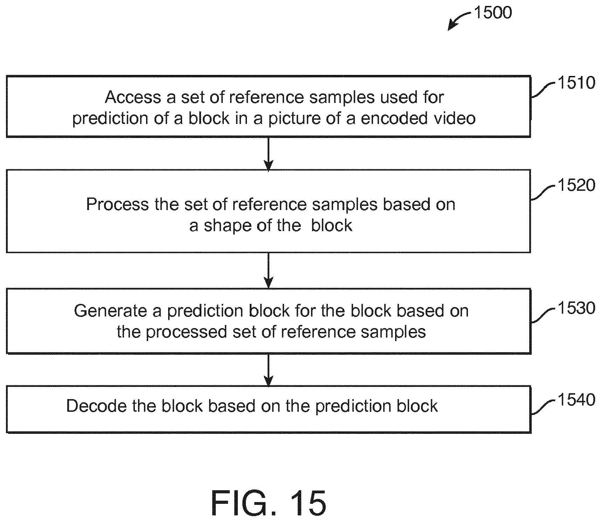

Figure 15 illustrates a flowchart 1500 of an exemplary method of video decoding in accordance with one embodiment of the present disclosure. The method 1500 includes, at step 1510, accessing a set of reference samples used for prediction of a block in a picture of an encoded video. Then, at step 1520, the method 1500 includes processing the set of reference samples based on a shape of the block. Next, at step 1530, the method 1500 includes generating a prediction block for the block based on the processed set of reference samples. Finally, at step 1540, the method 1500 includes decoding the block based on the prediction block. Steps 1510 to 1540 may be performed, e.g., by decoder 1400, (e.g., including module 800). In particular steps 1510 to 1530 may be performed by, e.g., module 1460, 800, 1475, including module 810 for step 1520 and modules 820, 830 for step 1530. The block shape may be, e.g., one of a square shape, vertical rectangular shape and horizontal rectangular shape.

According to one embodiment of the method, the prediction may be an intra-prediction or an inter-prediction.

According to one embodiment of the method, the processing may be enabled or selected when a function or characteristic of the block shape or associated with the block shape is greater than a value or threshold. Hence the condition is true when the function or characteristic is greater than a value or threshold. In one embodiment, the processing may be disabled or not selected when a function or characteristic is smaller than or equal to a value.

According to one embodiment of the method, the function or characteristic or property of the block shape or associated with the block shape may be a largest dimension of the block. In one embodiment, the largest dimension is the block width when the block shape is a horizontal rectangular shape; the largest dimension is the block height when the block shape is a vertical rectangular shape; the largest dimension is either a block weight or block height when the block shape is a square.

According to one embodiment of the method, the function or characteristic may be a diagonal length of the block.

According to one embodiment of the method, the function or characteristic may be a weighted sum of dimensions of the block (e.g., 2*weight + height).

According to one embodiment of the method, the processing may be further based on a prediction mode. In one embodiment, the processing may be further based on a directionality mode of prediction for the block.

According to one embodiment of the method, the processing may be enabled or selected for at least one prediction mode when the function or characteristic is greater than the value. For example, the processing may be enabled for horizontal prediction modes in horizontal rectangular blocks and vertical prediction modes in vertical rectangular blocks.

According to one embodiment of the method, for non-square blocks, the processing may be disabled or not selected for at least one directional prediction mode in a direction of the smallest dimension of the block. For example, the processing may be disabled for horizontal prediction modes in vertical rectangular blocks, and/or vertical prediction modes in horizontal rectangular blocks.

According to one embodiment of the method, at least one flag is included in the encoded video, the at least one flag indicating at least one of the value and whether the processing is enabled. The flag may be retrieved at the decoder prior to or during prediction.

According to one embodiment of the method, the processing includes smoothing filtering the set of reference samples. The smoothing filtering may be a low pass filtering.

According to one embodiment of the method, the prediction is based on the block shape. In one embodiment, at least one prediction mode (e.g., an intra-prediction direction) is allowed for at least one block shape. In one embodiment, at least one prediction mode is not allowed for at least one block shape. In one embodiment, at least one prediction mode is enabled or disabled when a condition of the block shape is true, as previously described.

It is to be understood that method 1500 also applies to any of the additional embodiments and examples previously described in the present disclosure in association with method 1300.

According to one embodiment, the method may further include receiving the encoded picture, entropy decoding the encoded block, inverse transforming the transform coefficient block to obtain decoded residuals, combining the decoded residuals with a predicted sample block to obtain a decoded/reconstructed image block. The transform coefficients may be further inverse quantized prior to inverse transformed. The steps of entropy decoding, inverse transforming and inverse quantizing may be performed by, e.g., modules 1430, 1450 and 1440 of decoder 1400, respectively. The steps of receiving, entropy decoding, inverse transforming and inverse quantizing, and combining may be optional, bypassed or removed, since they may have been previously performed by another device and/or provided to another device, or the results may have been retrieved from and/or stored in memory.

It is to be understood that any of the embodiments of the method 1500 described above may be implemented by decoder 1400 (e.g., 1460, 800, 1475). The modules of decoder 1400 may be implemented by hardware (e.g., integrated circuits) or in software, stored in memory and executed by a processor.

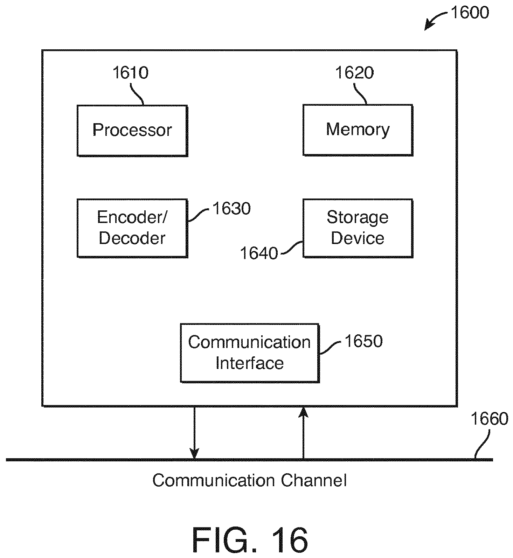

Figure 16 illustrates a block diagram 1600 of an exemplary system in which various aspects of the exemplary embodiments of the present disclosure may be implemented. System 1600 may be embodied as a device including the various components described below and is configured to perform the processes described above. Examples of such devices, include, but are not limited to, personal computers, laptop computers, smartphones, smart watches, tablet computers, digital multimedia set top boxes, digital television receivers, personal video recording systems, connected home appliances, and servers. System 1600 may be communicatively coupled to other similar systems, and to a display via a communication channel as shown in Figure 16 and as known by those skilled in the art to implement the exemplary video system described above. System 1600 may implement encoder 700 (e.g., including module 800), decoder 1400 (e.g., including module 800) or encoder(s) and decoder(s), independently or jointly. Moreover, system 1600 may implement and be configured to execute any of the processes of the present disclosure, including method 1300 and/or 1500, independently or jointly.

The system 1600 may include at least one processor 1610 configured to execute instructions loaded therein for implementing the various processes as discussed above. Processor 1610 may include embedded memory, input output interface and various other circuitries as known in the art. The system 1600 may also include at least one memory 1620 (e.g., a volatile memory device such as RAM, a non-volatile memory device such as ROM). System 1600 may additionally include a storage device 1640, which may include non-volatile memory, including, but not limited to, an erasable programmable read-only memory (EPROM), ROM, a programmable read-only memory (PROM), a dynamic RAM (DRAM), a static RAM (SRAM), flash memory, magnetic disk drive, and/or optical disk drive. The storage device 1640 may comprise an internal storage device, an attached storage device and/or a network accessible storage device, as non-limiting examples. System 1600 may also include an encoder/decoder module 1630 configured to process data to provide an encoded video or decoded video.

Encoder/decoder module 1630 represents the module(s) that may be included in a device to perform the encoding and/or decoding functions, for example, according to Figures 7 (e.g., including Figure 8) and 14 (e.g., including Figure 8), respectively. As is known in the art of compression, a device may include one or both of the encoding and decoding modules. Additionally, encoder/decoder module 1630 may be implemented as a separate element of system 1600 or may be incorporated within processors 1610 as a combination of hardware and software as known to those skilled in the art. For example, encoder/decoder module 1630 may be implemented as one or two separate integrated circuits and/or field-programmable gate array (FPGA).

Program code to be loaded onto processors 1610 to perform the various processes described hereinabove may be stored in storage device 1640 and subsequently loaded onto memory 1620 for execution by processors 1610. In accordance with the exemplary embodiments of the present disclosure, one or more of the processor(s) 1610, memory 1620, storage device 1640 and encoder/decoder module 1630 may store one or more of the various items during the performance of the processes discussed herein above, including, but not limited to the input video, the decode video, the bitstream, equations, formula, matrices, variables, operations, and operational logic.

The system 1600 may also include communication interface 1650 that enables communication with other devices via communication channel 1660. The communication interface 1650 may include, but is not limited to a transceiver configured to transmit and receive data from communication channel 1660. The communication interface may include, but is not limited to, a modem or network card and the communication channel may be implemented within a wired and/or wireless medium. The various components of system 1600 may be connected or communicatively coupled together using various suitable connections, including, but not limited to internal buses, wires, and printed circuit boards.

The exemplary embodiments according to the present disclosure may be carried out by computer software executed by the processor 1610 or by hardware, or by a combination of hardware and software. As a non-limiting example, the exemplary embodiments according to the present disclosure may be implemented by one or more integrated circuits. The memory 1620 may be of any type appropriate to the technical environment and may be implemented using any appropriate data storage technology, such as optical memory devices, magnetic memory devices, semiconductor-based memory devices, fixed memory and removable memory, as non-limiting examples. The processor 1610 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants (PDAs), and other devices that facilitate communication of information between end-users.

According to an aspect of the present disclosure, an apparatus 1600 for video encoding is provided, the apparatus including a processor 1610, and at least one memory 1620, 1640 coupled to the processor, the processor 1610 being configured to perform any of the embodiments of the method of video encoding 1300 described above.

According to an aspect of the present disclosure, an apparatus 1600 for video decoding is provided, the apparatus including a processor 1610, and at least one memory 1620, 1640 coupled to the processor, the processor 1610 being configured to perform any of the embodiments of the method of video decoding 1500 described above.

According to an aspect of the present disclosure, an apparatus for video encoding is provided including means for accessing a set of reference samples used for prediction of a block in a picture of a video, means for processing the set of reference samples based on a shape of the block, means for generating a prediction block for the block based on the processed set of reference samples and means for encoding the block based on the prediction block. The video encoder of Figures 7 (e.g., including Figure 8) and 16 may include the structure or means of the apparatus, particularly, modules 760 (e.g., 800), 770, 775, 1710 and 1730. The apparatus for video encoding may perform any of the embodiments of any of the method 1300 of video encoding.

According to an aspect of the present disclosure, an apparatus for video decoding is provided including means for accessing a set of reference samples used for prediction of a block in a picture of an encoded video, means for processing the set of reference samples based on a shape of the block, means for generating a prediction block for the block based on the processed set of reference samples and means for encoding the block based on the prediction block. Figures 14 (e.g., including Figure 8) and 17 may include the structure or means of the apparatus for video decoding, particularly, blocks 1460 (e.g., 800), 1475, 1710 and 1730. The apparatus for video decoding may perform any of the embodiments of any of the method 1500 of video decoding.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

According to an aspect of the present disclosure, a signal including a bitstream formatted to include encoded data representative of a block of a picture, the encoded data encoded according to any of the embodiments of any of the method 1300 of video encoding.

According to an aspect of the present disclosure, a bitstream formatted to include encoded data representative of a block of a picture, the encoded data encoded according to any of the embodiments of any of the method 1300 of video encoding.

Moreover, any of the methods 1300 and/or 1500 may be implemented as a computer program product (independently or jointly) comprising computer executable instructions which may be executed by a processor. The computer program product having the computer-executable instructions may be stored in the respective transitory or non-transitory computer-readable storage media of the system 1600, encoder 700 (e.g., including module 800) and/or decoder 1400 (e.g., including module 800).

According to an aspect of the present disclosure, a computer program product is provided including program code instructions for performing any of the embodiments of any of the methods 1300 and/or 1500 (independently or jointly) of the present disclosure.

It is important to note that one or more of the elements in the processes 1300 and/or 1500 may be combined, performed in a different order, or excluded in some embodiments while still implementing the aspects of the present disclosure. Other steps may be performed in parallel, where the processor does not wait for a full completion of a step before starting another.

Furthermore, aspects of the present disclosure can take the form of a computer-readable storage medium. Any combination of one or more computer-readable storage medium(s) may be utilized. A computer-readable storage medium can take the form of a computer-readable program product embodied in one or more computer-readable medium(s) and having computer-readable program code embodied thereon that is executable by a computer. A computer-readable storage medium as used herein is considered a non-transitory storage medium given the inherent capability to store the information therein as well as the inherent capability to provide retrieval of the information therefrom. A computer-readable storage medium may be, for example, but is not limited to, an electronic, magnetic, optical, electromagnetic, infrared, or semiconductor system, apparatus, or device, or any suitable combination of the foregoing.

It is to be appreciated that the following list, while providing more specific examples of computer-readable storage mediums to which the present disclosure may be applied, is merely an illustrative and not exhaustive listing as is readily appreciated by one of ordinary skill in the art. The list of examples includes a portable computer diskette, a hard disk, a ROM, EPROM, Flash memory, a portable compact disc read-only memory (CD-ROM), an optical storage device, a magnetic storage device, or any suitable combination of the foregoing.

According to an aspect of the present disclosure, a computer-readable storage medium carrying a software program is provided including program code instructions for performing any of the embodiments of any of the methods of the present disclosure, including methods 1300 and/or 1500.

It is to be understood that reference to "one embodiment" or "an embodiment" or "one implementation" or "an implementation" of the present disclosure, as well as other variations thereof, mean that a particular feature, structure, characteristic, and so forth described in connection with the embodiment is included in at least one embodiment of the present disclosure. Thus, the appearances of the phrase "in one embodiment" or "in an embodiment" or "in one implementation" or "in an implementation", as well any other variations, appearing in various places throughout the specification are not necessarily all referring to the same embodiment.

Additionally, the present disclosure or its claims may refer to "determining" various pieces of information. Determining the information may include one or more of, for example, estimating the information, calculating the information, predicting the information, or retrieving the information from memory.

Also, the present disclosure or its claims may refer to "providing" various pieces of information. Providing the information may include one or more of, for example, outputting the information, storing the information, transmitting the information, sending the information, displaying the information, showing the information, or moving the information.

Moreover, the present disclosure or its claims may refer to "accessing" various pieces of information. Accessing the information may include one or more of, for example, receiving the information, retrieving the information (for example, from memory), storing the information, processing the information, moving the information, copying the information, erasing the information, calculating the information, determining the information, predicting the information, or estimating the information.

Further, the present disclosure or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the various features shown and described are interchangeable. Unless otherwise indicated, a feature shown in one embodiment may be incorporated into another embodiment. Further, the features described in the various embodiments may be combined or separated unless otherwise indicated as inseparable or not combinable.

As noted before, the functions of the various elements shown in the figures may be provided through the use of dedicated hardware as well as hardware capable of executing software in association with appropriate software. Also, when provided by a processor, the functions may be provided by a single dedicated processor, by a single shared processor, or by a plurality of individual processors, some of which may be shared.

It is to be further understood that, because some of the constituent system components and methods depicted in the accompanying drawings are preferably implemented in software, the actual connections between the system components or the process function blocks may differ depending upon the manner in which the processes of present disclosure are programmed. Given the teachings herein, one of ordinary skill in the pertinent art will be able to contemplate these and similar implementations or configurations of the present disclosure.

Although the illustrative embodiments have been described herein with reference to the accompanying drawings, it is to be understood that the present disclosure is not limited to those precise embodiments, and that various changes and modifications may be effected therein by one of ordinary skill in the pertinent art without departing from the scope of the present disclosure. In addition, individual embodiments can be combined, without departing from the scope of the present disclosure. All such changes and modifications are intended to be included within the scope of the present disclosure as set forth in the appended claims.

**Claims**

1. A method (1300) of video encoding comprising:

   accessing (1310) a set of reference samples used for prediction of a block in a picture of a video;
   processing (1320) said set of reference samples based on a shape of said block;
   generating (1330) a prediction block for said block based on said processed set of reference samples; and
   encoding (1340) said block based on said prediction block.

2. An apparatus for video encoding comprising:

   means for accessing a set of reference samples used for prediction of a block in a picture of a video;
   means for processing said set of reference samples based on a shape of said block;
   means for generating a prediction block for said block based on said processed set of reference samples; and
   means for encoding said block based on said prediction block.

3. A method (1500) of video decoding comprising:

   accessing (1510) a set of reference samples used for prediction of a block in a picture of an encoded video;
   processing (1520) said set of reference samples based on a shape of said block;
   generating (1530) a prediction block for said block based on said processed set of reference samples; and
   decoding (1540) said block based on said prediction block.

4. An apparatus for video decoding comprising:

   means for accessing a set of reference samples used for prediction of a block in a picture of an encoded video;
   means for processing said set of reference samples based on a shape of said block;
   means for generating a prediction block for said block based on said processed set of reference samples; and
   means for encoding said block based on said prediction block.

5. The method according to any of claims 1 and 3, or the apparatus according to any of claims 2 and 4 wherein said processing is enabled when a function associated with said block shape is greater than a value.

6. The method according to claim 5, or the apparatus according to claim 5 wherein said function is one of a largest dimension of said block, a diagonal of said block and a weighted sum of dimensions of said block.

7. The method according to any of claims 5-6, or the apparatus according to any of claims 5-6 wherein said processing is further based on a prediction mode.

8. The method according to claim 8, or the apparatus according to claim 8 wherein said processing is enabled for at least one prediction mode when said function is greater than said value.

9. The method according to any of claims 1, 3 and 5-8, or the apparatus according to any of claims 2, 4, and 5-8 wherein, for non-square blocks, said processing is disabled for at least one directional prediction mode in a direction of the smallest dimension of the block.

10. The method according to any of claims 5-9 or the apparatus according to any of claims 5-9 wherein at least one flag is included in the encoded video, said at least one flag indicating at least one of said value and whether said processing is enabled.

11. The method according to any of claims 1, 3 and 5-10, or the apparatus according to any of claims 2, 4 and 5-10 wherein said processing includes smoothing filtering said set of reference samples.

12. The method according to any of claims 1, 3 and 5-11, or the apparatus according to any of claims 2, 4 and 5-11 wherein said prediction is based on said block shape.

13. A computer program product including program code instructions for performing the method according to any of claims 1, 3 and 5-12.

14. A computer-readable storage medium carrying a software program including program code instructions for the method according to any of claims 1, 3 and 5-12.

15. A bitstream formatted to include encoded data representative of a block of a picture, the encoded data encoded according to any of claims 1 and 5-12.

FIG. 1

FIG. 2

FIG. 3

HOR_UP        HOR_DOWN        VER_LEFT        VER_RIGHT

FIG. 4

HOR_TRIPLE        VER_TRIPLE

FIG. 5

610 615 620 625 630 635

NO_SPLIT   QT_SPLIT   HOR   VER   HOR_TRIPLE   VER_TRIPLE

640 645 650 655

HOR_UP   HOR_DOWN   VER_LEFT   VER_RIGHT

600

# FIG. 6

710 725 730 745

+ → Transform → Quantization → Entropy coding →
−

740 — Inverse Quantization

750 — Inverse Transform

700

705

755

Intra prediction   760

765

770

Motion Compensation

In-loop Filter(s)

Motion Estimation

Reference Picture Buffer

775

780

# FIG. 7

FIG. 8

EP 3 496 401 A1

FIG. 9

FIG. 10

a) Horizontal prediction

b) Vertical prediction

▨ Reference samples (one or more lines of pixels)

▨ Prediction block (computed from reference samples)

⟋ Prediction direction (reference samples propagation)

FIG. 11

a) Horizontal prediction with a vertical block

b) Vertical prediction with a vertical block

c) Horizontal prediction with a horizontal block

d) Vertical prediction with a horizontal block

Reference samples (one or more lines of pixels)

Prediction block (computed from reference samples)

Prediction direction (reference samples propagation)

1200

FIG. 12

1300

Access a set of reference samples used for
prediction of a block in a picture of a video — 1310

Process the set of reference samples based on
a shape of the block — 1320

Generate a prediction block for the block based on
the processed set of reference samples — 1330

Encode the block based on the prediction block — 1340

# FIG. 13

FIG. 14

1500

| Access a set of reference samples used for prediction of a block in a picture of a encoded video | 1510 |

| Process the set of reference samples based on a shape of the block | 1520 |

| Generate a prediction block for the block based on the processed set of reference samples | 1530 |

| Decode the block based on the prediction block | 1540 |

FIG. 15

1600

1610                               1620

| Processor |          | Memory |

| Encoder/ Decoder |  1630          | Storage Device |
                     1640

| Communication Interface |  1650

1660

Communication Channel

# FIG. 16

Europäisches
Patentamt

European
Patent Office

Office européen
des brevets

## EUROPEAN SEARCH REPORT

Application Number

EP 17 30 6703

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/082224 A1 (VAN DER AUWERA GEERT [US] ET AL) 5 April 2012 (2012-04-05)<br>* abstract; figure 2b *<br>* paragraph [0125] - paragraph [0126] *<br>* paragraph [0005] - paragraph [0006] *<br>* paragraph [0029] *<br>* paragraph [0046] *<br>* paragraph [0076] - paragraph [0081] *<br>----- | 1-15 | INV.<br>H04N19/105<br>H04N19/159<br>H04N19/117<br>H04N19/82 |
| X | US 2012/320974 A1 (LI GUICHUN [US] ET AL) 20 December 2012 (2012-12-20)<br>* abstract *<br>* paragraph [0005] - paragraph [0007] *<br>* paragraph [0035] - paragraph [0056] *<br>----- | 1-15 | |

TECHNICAL FIELDS
SEARCHED (IPC)

H04N

The present search report has been drawn up for all claims

| Place of search | Date of completion of the search | Examiner |
|---|---|---|
| Munich | 31 January 2018 | Schoeyer, Marnix |

EPO FORM 1503 03.82 (P04C01)

## ANNEX TO THE EUROPEAN SEARCH REPORT
## ON EUROPEAN PATENT APPLICATION NO.

EP 17 30 6703

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2018

| Patent document cited in search report | | | Publication date | Patent family member(s) | | | Publication date |
|---|---|---|---|---|---|---|---|
| US 2012082224 | A1 | | 05-04-2012 | AU | 2011308653 | A1 | 02-05-2013 |
| | | | | BR | 112013007563 | A2 | 02-08-2016 |
| | | | | CA | 2812307 | A1 | 05-04-2012 |
| | | | | CN | 103141100 | A | 05-06-2013 |
| | | | | DK | 2622858 | T3 | 15-01-2018 |
| | | | | EP | 2622858 | A1 | 07-08-2013 |
| | | | | HK | 1182249 | A1 | 11-08-2017 |
| | | | | IL | 225331 | A | 31-01-2017 |
| | | | | JP | 5587508 | B2 | 10-09-2014 |
| | | | | JP | 2013543315 | A | 28-11-2013 |
| | | | | KR | 20130063030 | A | 13-06-2013 |
| | | | | KR | 20150021113 | A | 27-02-2015 |
| | | | | RU | 2013120332 | A | 20-11-2014 |
| | | | | SG | 189036 | A1 | 31-05-2013 |
| | | | | US | 2012082224 | A1 | 05-04-2012 |
| | | | | WO | 2012044886 | A1 | 05-04-2012 |
| US 2012320974 | A1 | | 20-12-2012 | CN | 103609124 | A | 26-02-2014 |
| | | | | US | 2012320974 | A1 | 20-12-2012 |
| | | | | US | 2017155925 | A1 | 01-06-2017 |
| | | | | WO | 2012171474 | A2 | 20-12-2012 |

EPO FORM P0459

For more details about this annex : see Official Journal of the European Patent Office, No. 12/82